# EUROPÄISCHE PATENTSCHRIFT

(11) **EP 3 740 451 B1**
(45) Veröffentlichungstag und Bekanntmachung des Hinweises auf die Patenterteilung: **20.08.2025**
(21) Anmeldenummer: 18830385.3
(22) Anmeldetag: 13.12.2018
(51) Int. Cl.: B66F 9/06, B66F 9/075

(54) **VERFAHREN ZUM BETREIBEN EINER ANLAGE**
METHOD FOR OPERATING A SYSTEM
PROCÉDÉ DE FONCTIONNEMENT D'UNE INSTALLATION

(30) Priorität: 18.01.2018 DE 102018000365
(43) Veröffentlichungstag der Anmeldung: 25.11.2020
(73) Patentinhaber: SEW-EURODRIVE GmbH & Co. KG, 76646 Bruchsal (DE)
(72) Erfinder: AYHAN, Serdal, 69234 Dielheim (DE); WANJEK, Andreas, 68753 Waghäusel (DE); HUA, Zhidong, 76646 Bruchsal (DE); SCHÄFER, Thomas, 76689 Karlsdorf-Neuthard (DE); SCHMIDT, Josef, 76676 Graben-Neudorf (DE)
(86) Internationale Anmeldenummer: PCT/EP2018/025319
(87) Internationale Veröffentlichungsnummer: WO 2019/141339

(56) Entgegenhaltungen:
- EP-A1- 3 132 859
- DE-A1- 19 540 928
- US-A1- 2013 302 132

## Beschreibung

Die Erfindung betrifft ein Verfahren zum Betreiben einer Anlage.

Es ist allgemein bekannt, dass mittels Mobilteilen, wie fahrerlose Transportsysteme (FTS), logistische Aufgaben in einer Anlage erledigbar sind.

**Aus der** US 2013 / 302132 A1 **ist als nächstliegender Stand der Technik ein Verfahren zum Manövrieren eines Mobilteils** bekannt, wo alle Merkmale des Oberbegriffs des Anspruchs 1 offenbart werden.

**Aus der** DE 195 40 928 A1 **ist ein Positionierverfahren bekannt.**

**Aus der** EP 3 132 859 A1 **ist eine Fördervorrichtung mit Kollisionsdetektion bekannt.**

Der Erfindung liegt daher die Aufgabe zugrunde, die Abläufe innerhalb der Anlage effizienter auszubilden.

Erfindungsgemäß wird die Aufgabe bei dem Verfahren nach den in Anspruch 1 angegebenen Merkmalen gelöst.

Wichtige Merkmale der Erfindung bei dem Verfahren zum Betreiben einer Anlage sind, dass die Anlage ein auf einer Verfahrfläche der Anlage verfahrbares Mobilteil aufweist und einen Lastträger, insbesondere einen in der Anlage stationär angeordneten Lastträger,
wobei das Mobilteil einen mit einer Steuerung des Mobilteils verbundenen Radarsensor aufweist,
wobei in einem ersten Verfahrensschritt der Abstand vom Radarsensor zu dem Lastträger bestimmt wird,
in einem zweiten Verfahrensschritt das Mobilteil auf eine Position gefahren wird, bei welcher der Abstand zwischen Radarsensor und Lastträger einen vorgegebenen Sollabstand erreicht,
in einem dritten Verfahrensschritt das Frequenzspektrum eines Zwischenfrequenzsignals bestimmt wird, welches durch Mischen der vom Radarsensor, insbesondere zum Lastträger hin, ausgesendeten und, insbesondere vom Lastträger her, empfangenen Radarstrahlung erzeugt ist,
in einem vierten Verfahrensschritt, insbesondere mittels Mustererkennung, das Frequenzspektrum, insbesondere das durch das Frequenzspektrum gebildete Muster, mit gespeicherten Muster-Vorlagen verglichen wird und das Ergebnis des Vergleichs der Steuerung zugeleitet wird,
in einem fünften Verfahrensschritt die Steuerung Aktoren, wie Antrieb und/oder Lenkeinheit des Mobilteils, abhängig vom Ergebnis ansteuert,
insbesondere also die Steuerung vom Ergebnis abhängig einen Steuerungsablauf durchführt.

Von Vorteil ist dabei, dass abhängig von dem Nicht-Vorhandensein oder bei Vorhandensein von der Sorte des Lastträgers die Steuerung unterschiedliche Steuerungsabläufe ausführen lässt. Wenn also beispielsweise kein Lastträger am erwarteten Platz, insbesondere Regallagerplatz, feststellbar ist, ist beispielsweise ein Stoppen und Warten des Mobilteils ausführbar oder eine andere logistische Aufgabe ist durch das Mobilteil übernehmbar. Wenn jedoch beispielsweise eine Gitterbox erkannt wird, ist eine Aufnahme der Gitterbox auf dem Mobilteil ausführbar und dann die Gitterbox an einen anderen Platz bringbar.

Wenn hingegen eine Stahlwandbox erkannt wird, ist die Aufnahme derselben auf das Mobilteil ausführbar. Wenn aber eine Europalette erkannt wird, wird zunächst bewertet, ob Ladung auf der Europalette angeordnet ist oder nicht. Falls keine Ladung vorhanden ist, wird entweder vom Mobilteil mittransportierte Ladung auf der Europalette abgesetzt oder die Europalette vom Mobilteil aufgenommen und an einen anderen Platz transportiert.

Bei einer vorteilhaften Ausgestaltung ist im vierten Verfahrensschritt das Ergebnis des Vergleichens die Sorte des Lastträgers. Von Vorteil ist dabei, dass die Sorte des Lastträgers, beispielsweise Europalette mit Ladung, Europalette ohne Ladung, Gitterbox oder Stahlwandbox, erkennbar ist mittels der Radarsensoren. Eine mit einer auf dem Mobilteil angeordneten Kamera verbundene Bildauswerteeinheit ist zwar zusätzlich verwendbar, aber nicht notwendig. Durch die genannte Bildauswertung ist die Fehleranfälligkeit der auf Radarsensoren basierten Erkennung der Sorte reduzierbar. Allerdings benötigt die Bildauswerteeinheit Rechenzeit.

Bei einer vorteilhaften Ausgestaltung ist eine erste Muster-Vorlage aus dem Frequenzspektrum des Zwischenfrequenzsignals des Radarsensors bei der Detektion einer Gitterbox erzeugt,
insbesondere wobei die Gitterbox eine Seitenwand mit einem Stahlgitter aufweist, insbesondere dessen Gitteröffnungen einen kleiner als 5 cm großen maximalen lichten Durchmesser aufweisen,
insbesondere wobei die Gitterbox nach oben offen ausgeführt ist. Von Vorteil ist dabei, dass eine Gitterbox erkennbar ist, obwohl sie Gitteröffnungen aufweist und somit nur Teile der Oberfläche Radarstrahlung reflektieren.

Bei einer vorteilhaften Ausgestaltung ist eine zweite Muster-Vorlage aus dem Frequenzspektrum des Zwischenfrequenzsignals des Radarsensors bei der Detektion einer Stahlwandbox erzeugt,
insbesondere wobei die Stahlwandbox eine Seitenwand aus einer Stahlvollwand aufweist,
insbesondere wobei die Stahlwandbox nach oben offen ausgeführt ist. Von Vorteil ist dabei, dass eine starke Reflexion von Radarstrahlung bewirkt wird und somit eine gute Erkennbarkeit erreichbar ist.

Bei einer vorteilhaften Ausgestaltung ist eine dritte Muster-Vorlage aus dem Frequenzspektrum des Zwischenfrequenzsignals des Radarsensors bei der Detektion einer Europalette mit Beladung erzeugt,
insbesondere wobei die Europalette aus Holz gefertigt ist und die Beladung einen PappKarton aufweist. Von Vorteil ist dabei, dass ein die in der Beladung auf genommenen Teile umgebender Pappkarton, der auf der Europalette aus Holz angeordnet ist, nur wenig Radarstrahlung reflektiert und somit gut unterscheidbar ist von einer Gitterbox und auch von einer Stahlwandbox.

Bei einer vorteilhaften Ausgestaltung ist eine vierte Muster-Vorlage aus dem Frequenzspektrum des Zwischenfrequenzsignals des Radarsensors bei der Detektion einer Europalette ohne Beladung erzeugt,
insbesondere wobei die Europalette aus Holz gefertigt ist aufweist. Von Vorteil ist dabei, dass wegen der fehlenden Ladung von dem erwarteten Abstand keine Reflexion erzeugt wird sondern die Radarstrahlung von weiter entfernten Objekten reflektiert wird. Auf diese Weise ist erkennbar, dass keine Beladung vorliegt. Die aus Holz gefertigte Europalette jedoch erzeugt ein für sie charakteristisches reflektiertes Signal, das erkennbar ist. Somit ist also auch eine Europalette ohne Beladung erkennbar.

Wichtige Merkmale **einer** Anlage zur Durchführung eines vorgenannten Verfahrens sind, dass die Anlage ein auf einer Verfahrfläche der Anlage verfahrbares Mobilteil und einen in der Anlage, insbesondere auf der Verfahrfläche angeordneten, Lastträger aufweist,
wobei das Mobilteil eine Steuerung, einen mittels der Steuerung steuerbaren elektrischen Antrieb und eine steuerbare Lenkeinheit aufweist,
wobei am Mobilteil ein Radarsensor angeordnet ist,
wobei der Radarsensor mit der am Mobilteil angeordneten Steuerung zur Signalübertragung verbunden ist,
wobei die Steuerung den Antrieb und die Lenkeinheit in Abhängigkeit von den Signalen des Radarsensors steuert.

Von Vorteil ist dabei, dass abhängig von der erkannten Sorte des Ladungsträgers ein jeweiliger Steuerungsablauf ausführbar ist. Insbesondere bewirken also Gitterboxen, Europaletten mit Beladung, Europaletten ohne Beladung und Stahlwandboxen unterschiedliche Bewegungsabläufe des Mobilteils. Vorzugsweise sind diese Ladungsträger an Plätzen in einem Regallager angeordnet und das Mobilteil ist spurgeführt, so dass es an eine zu jedem Platz des Regallagers zugeordnete Position verfahren kann, von der aus mittels der Radarsensoren die Sorte des jeweiligen Lastträgers erkennbar ist. Von der erkannten Sorte abhängig sind dann im weiteren zeitlichen Verlauf unterschiedliche Bewegungsabläufe ausführbar.

Bei einer vorteilhaften Ausgestaltung weist das Mobilteil ein Mittel zur Spurführung auf, welches mit der Steuerung des Mobilteils verbunden ist,
insbesondere wobei ein Spurführungsmittel, insbesondere ein Metalldraht oder eine metallische Leitung, an der Verfahrfläche in der Anlage verlegt ist. Von Vorteil ist dabei, dass das Mobilteil die zu jedem Platz zugeordnete Position in einfacher Weise erreichen kann, indem es der Spur entlangfährt und mittels eines Positionserfassungssystems die zugeordnete Position anfährt. Von dort wird dann mittels der Radarsensoren die Erkennung ausgeführt. Auf dieses Weise wird der Platz stets unter dem selben Winkel und Abstand mittels der Radarsensoren erfasst und detektiert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

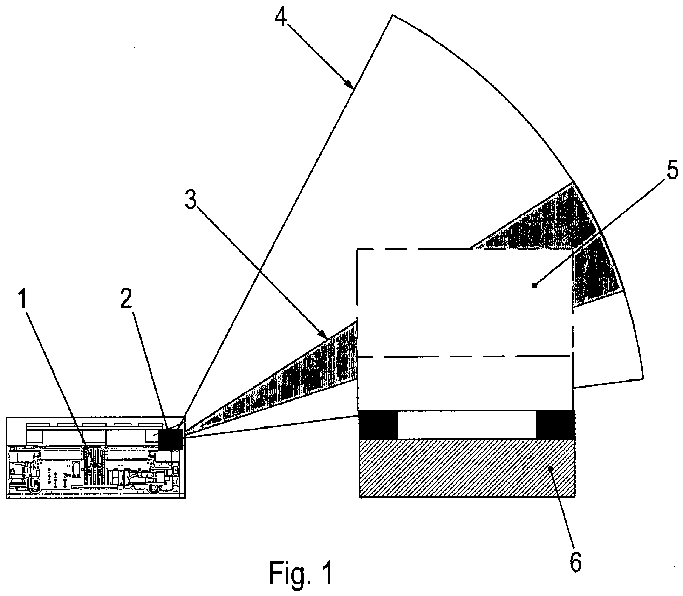

In der Figur 1 ist ein Mobilteil 1 dargestellt, welches einen Radarsensor 2 aufweist, dessen empfindlicher Bereich 4 auf einen ersten Lastträger, nämlich Europalette mit Ladung, gerichtet ist.

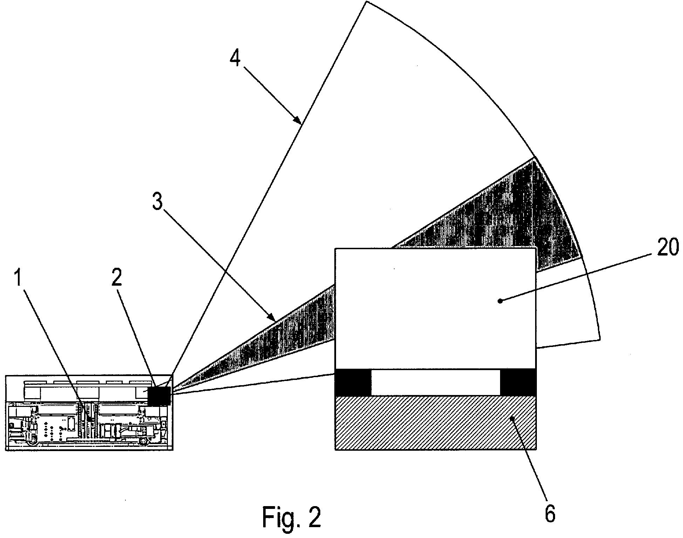

In der Figur 2 ist das Mobilteil 1 dargestellt, dessen empfindlicher Bereich 4 des Radarsensors 2 auf einen zweiten Lastträger, nämlich Stahlwandbox, gerichtet ist.

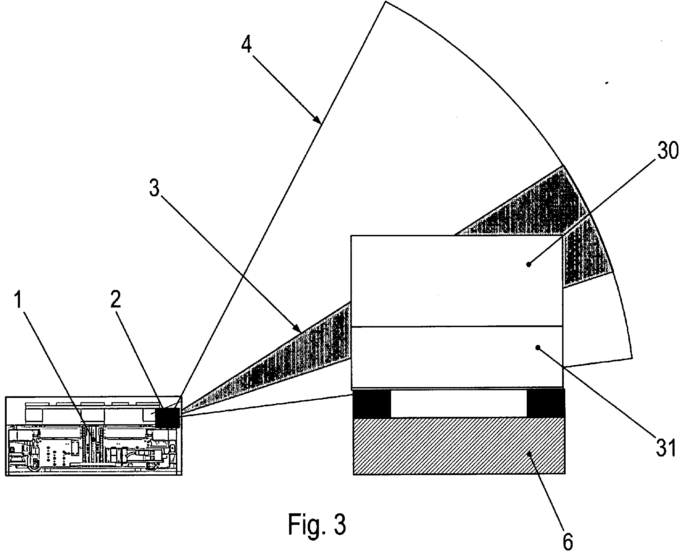

In der Figur 3 ist das Mobilteil 1 dargestellt, dessen empfindlicher Bereich 4 des Radarsensors 2 auf einen dritten Lastträger, nämlich Gitterbox 31 mit bewegbar angeordneter Klappe, gerichtet ist.

Wie in den Figuren dargestellt, weist der Radarsensor 2 einen empfindlichen Bereich 4 auf, so dass der Abstand zwischen Sensor 2 und Objekten bestimmbar ist. Hierzu wird als Sensor ein vorzugsweise ein FCMW-Radarsensor verwendet. Hierbei wird als Auswertung des Sensorsignals des Sensors 2 das gesendete mit dem reflektierten, vom Sensor 2 empfangenen Radarsignal gemischt und damit ein Zwischenfrequenzsignal erzeugt, welches einer Auswerteeinheit zugeführt wird.

Die Auswerteeinheit ist am Mobilteil 1 angeordnet und bestimmt vorzugsweise mittels Fouriertransformation ein Frequenzspektrum des Zwischenfrequenzsignals.

Das durch das Frequenzspektrum gebildete Muster wird von einem Mittel zur Mustererkennung ausgewertet, welches das gebildete Muster mit gespeicherten Mustern, also Muster-Vorlagen, vergleicht. Sobald eine der Muster-Vorlagen erkannt wird, wird diese Information von dem Mittel zur Mustererkennung an eine Steuerung des Mobilteils weitergeleitet, welche dann abhängig von dieser Information weitere Steuerungsabläufe für das Mobilteil 1 startet.

Eine erste Muster-Vorlage ist das gespeicherte Muster des Frequenzspektrums einer detektierten Gitterbox 31 mit an ihr bewegbar angeordneten Klappe 30. Dabei weist die Gitterbox ein metallisches Gitter, insbesondere Stahlgitter, auf. Da ein Gitter durchgehende Gitterlücken aufweist, unterscheidet sich die erste Muster-Vorlage deutlich von der Muster-Vorlage einer Stahlwand-Box.

Bei einer solchen Stahlwandbox 20 wird die Radarstrahlung im Gegensatz zu einer Gitterbox 31 stärker reflektiert, da die Stahlwandbox 20 eine ununterbrochene Stahlwand aufweist.

Eine dritte Muster-Vorlage entspricht dem Muster des Frequenzspektrums einer Europalette 5 mit Ladung. Dabei ist die Europalette 5 aus Holz gefertigt und nimmt eine Ladung auf, welche vorzugsweise in einem Pappkarton aufgenommen ist. Somit wird die Radarstrahlung von der Europalette 5 und ihrer aufgenommenen Last, insbesondere Pappkarton, weniger reflektiert als von der Stahlwandbox 20. Außerdem unterscheidet sich das Muster auch von dem Muster der Gitterbox 31, da die Gitterlücken der Gitterbox keine homogene Fläche darstellen, insbesondere im Gegensatz zur Stahlwand der Stahlwandbox und auch im Unterschied zur Seite eines Pappkartons.

Mittels Vergleichs mit einer weiteren Muster-Vorlage ist bei der Mustererkennung sogar erkennbar, ob die an einer Gitterbox 31 bewegbar, insbesondere verschiebbar oder klappbar, angeordnete Klappe in einer ersten oder zweiten Stellung angeordnet ist, insbesondere also die Seitenwand der Gitterbox 31 mittels der Klappe geschlossen oder geöffnet ist.

Die Gitterbox 31 ist nach oben geöffnet, weist also eine quaderförmige Form auf, wobei die Unterseite mit den vier Seitenwänden verbunden ist und an ihrer von der Oberseite abgewandten Seite Fußberieche auf. Die Oberseite des Quaders ist ohne Material ausgeführt, weshalb die Gitterbox 31 nach oben offen ist.

Ebenso ist die Stahlwandbox 20 nach oben geöffnet, weist also eine quaderförmige Form auf, wobei die Unterseite mit den vier Seitenwänden verbunden ist und an ihrer von der Oberseite abgewandten Seite Fußbereiche auf. Die Oberseite des Quaders ist ohne Material ausgeführt, weshalb die Stahlwandbox 20 nach oben offen ist.

Um die Mustererkennung fehlerarm zu gestalten, fährt das Mobilteil 1 auf einer Verfahrfläche einer Anlage bis auf einen vorgegebenen Sollabstand an den Lastträger heran, wobei auch die Ausrichtung des Mobilteils 1 zum Lastträger vorgegeben ist, insbesondere durch das Entlangfahren des Mobilteils 1 entlang einer in der Anlage angeordneten Spur. Sobald der Sollabstand vom Mobilteil 1 erreicht ist, wird das Zwischenfrequenzsignal des Radarsensors 2 ausgewertet und somit mittels der Mustererkennung der Typ des Lastträgers bestimmt.

Auf diese Weise ist auch in einem Lager für einen jeweiligen Lagerplatz die Sorte des in ihm aufgenommenen Lastträgers bestimmbar beziehungsweise, ob überhaupt ein Lastträger aufgenommen ist.

Um die Mustererkennung fehlerarm zu gestalten, wird aus dem empfindlichen Bereich 4, der für Abstandsbestimmung verwendbar ist nur ein Teilbereich des empfindlichen Bereichs 4 verwendet, nämlich der Erkennungsbereich 3. Dieser ist in einem festgelegten Winkel zur Verfahrfläche und in einem festgelegten Winkel zum Mobilteil, insbesondere zu einer Achse eines nicht lenkbaren Rades des Mobilteils 1 vorgesehen. Somit sind bei Durchführung der Mustererkennung möglichst gleichartige Randbedingungen gewährleistet.

Vorzugsweise wird der Radarsensor im E-Band, insbesondere im ISM-Band, oder W-Band betrieben. Die Auflösung beträgt zwischen 1cm und 10 cm, insbesondere 4cm. Somit sind die Gitteröffnungen einer industrieüblichen Gitterbox nicht exakt auflösbar.

Bei weiteren erfindungsgemäßen Ausführungsbeispielen wird der Radarsensor im ISM-Band mit einer Bandbreite von 5GHz betrieben.

### Bezugszeichenliste

1 Mobilteil
2 Radarsensor
3 Erkennungsbereich
4 empfindlicher Bereich
5 Europalette mit Ladung
6 Aufnahmevorrichtung
20 Stahlwandbox
31 Gitterbox
30 bewegbar angeordnete Klappe

## Patentansprüche

1. Verfahren zum Betreiben einer Anlage,
wobei die Anlage ein auf einer Verfahrfläche der Anlage verfahrbares Mobilteil (1) aufweist und einen Lastträger, insbesondere einen in der Anlage stationär angeordneten Lastträger, wobei das Mobilteil (1) einen mit einer Steuerung des Mobilteils (1) verbundenen Radarsensor (2) aufweist,
wobei in einem ersten Verfahrensschritt der Abstand vom Radarsensor (2) zu dem Lastträger bestimmt wird,
in einem zweiten Verfahrensschritt das Mobilteil (1) auf eine Position gefahren wird, bei welcher der Abstand zwischen Radarsensor (2) und Lastträger einen vorgegebenen Sollabstand erreicht,
**dadurch gekennzeichnet, dass**
in einem dritten Verfahrensschritt das Frequenzspektrum eines Zwischenfrequenzsignals bestimmt wird, welches durch Mischen der vom Radarsensor (2), insbesondere zum Lastträger hin, ausgesendeten und, insbesondere vom Lastträger her, empfangenen Radarstrahlung erzeugt ist,
in einem vierten Verfahrensschritt, insbesondere mittels Mustererkennung, das Frequenzspektrum, insbesondere das durch das Frequenzspektrum gebildete Muster, mit gespeicherten Muster-Vorlagen verglichen wird und das Ergebnis des Vergleichs der Steuerung zugeleitet wird,
in einem fünften Verfahrensschritt die Steuerung Aktoren, wie Antrieb und/oder Lenkeinheit des Mobilteils (1), abhängig vom Ergebnis ansteuert,
insbesondere also die Steuerung vom Ergebnis abhängig einen Steuerungsablauf durchführt.

2. Verfahren nach Anspruch 1,
**dadurch gekennzeichnet, dass**
im vierten Verfahrensschritt das Ergebnis des Vergleichens die Sorte des Lastträgers ist.

3. Verfahren nach mindestens einem der vorangegangenen Ansprüche,
**dadurch gekennzeichnet, dass**
eine erste Muster-Vorlage aus dem Frequenzspektrum des Zwischenfrequenzsignals des Radarsensors (2) bei der Detektion einer Gitterbox (31) erzeugt ist,
insbesondere wobei die Gitterbox (31) eine Seitenwand mit einem Stahlgitter aufweist, insbesondere dessen Gitteröffnungen einen kleiner als 5 cm betragenden, maximalen lichten Durchmesser aufweisen,
insbesondere wobei die Gitterbox (31) nach oben offen ausgeführt ist.

4. Verfahren nach mindestens einem der vorangegangenen Ansprüche,
**dadurch gekennzeichnet, dass**
eine zweite Muster-Vorlage aus dem Frequenzspektrum des Zwischenfrequenzsignals des Radarsensors (2) bei der Detektion einer Stahlwandbox (20) erzeugt ist,
insbesondere wobei die Stahlwandbox (20) eine Seitenwand aus einer Stahlvollwand aufweist,
insbesondere wobei die Stahlwandbox (20) nach oben offen ausgeführt ist.

5. Verfahren nach mindestens einem der vorangegangenen Ansprüche,
**dadurch gekennzeichnet, dass**
eine dritte Muster-Vorlage aus dem Frequenzspektrum des Zwischenfrequenzsignals des Radarsensors (2) bei der Detektion einer Europalette (5) mit Beladung erzeugt ist,
insbesondere wobei die Europalette (5) aus Holz gefertigt ist und die Beladung einen PappKarton aufweist.

6. Verfahren nach mindestens einem der vorangegangenen Ansprüche,
**dadurch gekennzeichnet, dass**
eine vierte Muster-Vorlage aus dem Frequenzspektrum des Zwischenfrequenzsignals des Radarsensors (2) bei der Detektion einer Europalette (5) ohne Beladung erzeugt ist,
insbesondere wobei die Europalette (5) aus Holz gefertigt ist aufweist.

## Claims

1. Method for operating a facility,
wherein the facility comprises a movable part (1), which is movable on a movement surface of the facility, and a load carrier, in particular a load carrier which is arranged in a stationary manner in the facility,
wherein the movable part (1) comprises a radar sensor (2), which is connected to a controller of the movable part (1),
wherein in a first method step the distance from the radar sensor (2) to the load carrier is determined,
in a second method step the movable part (1) is moved to a position at which the distance between the radar sensor (2) and the load carrier reaches a predefined target distance,
**characterized in that**
in a third method step the frequency spectrum of an intermediate frequency signal is determined, said intermediate frequency signal being generated by mixing the radar radiation emitted by the radar sensor (2), in particular toward the load carrier, and the radar radiation received, in particular from the load carrier,
in a fourth method step the frequency spectrum, in particular the pattern formed by the frequency spectrum, is compared with stored pattern templates, in particular by means of pattern recognition, and the result of the comparison is forwarded to the controller,
in a fifth method step the controller controls actuators, such as a drive and/or a steering unit, of the movable part (1) as a function of the result,
i.e. in particular the controller executes a control sequence as a function of the result.

2. Method according to claim 1,
**characterized in that**
in the fourth method step the result of the comparison is the type of load carrier.

3. Method according to at least one of the preceding claims,
**characterized in that**
a first pattern template is generated from the frequency spectrum of the intermediate frequency signal of the radar sensor (2) during detection of a wire-mesh crate (31),
in particular wherein the wire-mesh crate (31) has a side wall comprising a steel mesh, in particular the mesh openings of which have a maximum clear diameter of less than 5 cm,
in particular wherein the wire-mesh crate (31) is open at the top.

4. Method according to at least one of the preceding claims,
**characterized in that**
a second pattern template is generated from the frequency spectrum of the intermediate frequency signal of the radar sensor (2) during detection of a steel-walled box (20),
in particular wherein the steel-walled box (20) has a side wall formed of a solid steel wall,
in particular wherein the steel-walled box (20) is open at the top.

5. Method according to at least one of the preceding claims,
**characterized in that**
a third pattern template is generated from the frequency spectrum of the intermediate frequency signal of the radar sensor (2) during detection of a Euro pallet (5) with a load,
in particular wherein the Euro pallet (5) is made of wood and the load comprises a cardboard box.

6. Method according to at least one of the preceding claims,
**characterized in that**
a fourth pattern template is generated from the frequency spectrum of the intermediate frequency signal of the radar sensor (2) during detection of a Euro pallet (5) without a load, in particular wherein the Euro pallet (5) is made of comprises wood.

## Revendications

1. Procédé dévolu au fonctionnement d'une installation,
laquelle installation comprend une partie mobile (1) apte à se déplacer sur une surface de déplacement de ladite installation, et un support de charges, en particulier un support de charges implanté de manière fixe dans ladite installation,
la partie mobile (1) étant munie d'un capteur radar (2) raccordé à une commande de ladite partie mobile (1),
sachant que,
lors d'une première étape opératoire, la distance comprise entre le capteur radar (2) et le support de charges est déterminée,
lors d'une deuxième étape opératoire, la partie mobile (1) est transposée à un emplacement auquel la distance, entre le capteur radar (2) et le support de charges, atteint une distance de consigne préétablie,
**caractérisé par le fait que**,
lors d'une troisième étape opératoire, il s'effectue une détermination du spectre de fréquence d'un signal de fréquence intermédiaire engendré par combinaison du rayonnement radar émis par le capteur radar (2), notamment en direction du support de charges, et reçu notamment en provenance dudit support de charges,
lors d'une quatrième étape opératoire, le spectre de fréquence, en particulier le modèle formé par ledit spectre de fréquence est comparé à des gabarits de modèles mémorisés, notamment par le biais d'une reconnaissance de modèles, et le résultat de la comparaison est transmis à la commande,
lors d'une cinquième étape opératoire, ladite commande pilote, en fonction dudit résultat, des actionneurs tels qu'un entraînement et/ou une unité de direction de la partie mobile (1),
c'est-à-dire, en particulier, que ladite commande exécute un déroulement du pilotage tributaire dudit résultat.

2. Procédé selon la revendication 1,
**caractérisé par le fait que**,
lors de la quatrième étape opératoire, le résultat de la comparaison est le type du support de charges.

3. Procédé selon au moins l'une des revendications précédentes,
**caractérisé par le fait**
**qu'**un premier gabarit de modèle est engendré, lors de la détection d'un caisson (31) à claire-voie, sur la base du spectre de fréquence du signal de fréquence intermédiaire du capteur radar (2),
sachant notamment que ledit caisson (31) à claire-voie comporte une paroi latérale dotée d'un grillage d'acier
dont les ouvertures présentent, en particulier, un diamètre intérieur maximal inférieur à 5 cm, ledit caisson (31) à claire-voie étant notamment de réalisation ouverte vers le haut.

4. Procédé selon au moins l'une des revendications précédentes,
**caractérisé par le fait**
**qu'**un deuxième gabarit de modèle est engendré, lors de la détection d'un caisson (20) à paroi d'acier, sur la base du spectre de fréquence du signal de fréquence intermédiaire du capteur radar (2),
sachant notamment que ledit caisson (20) à paroi d'acier est nanti d'une paroi latérale se présentant comme une paroi pleine en acier,
ledit caisson (20) à paroi d'acier étant notamment de réalisation ouverte vers le haut.

5. Procédé selon au moins l'une des revendications précédentes,
**caractérisé par le fait**
**qu'**un troisième gabarit de modèle est engendré, lors de la détection d'une Europalette (5) portant chargement, sur la base du spectre de fréquence du signal de fréquence intermédiaire du capteur radar (2),
sachant notamment que ladite Europalette (5) est fabriquée en bois et que ledit chargement comporte une boîte en carton.

6. Procédé selon au moins l'une des revendications précédentes,
**caractérisé par le fait**
**qu'**un quatrième gabarit de modèle est engendré, lors de la détection d'une Europalette (5) dépourvue de chargement, sur la base du spectre de fréquence du signal de fréquence intermédiaire du capteur radar (2),
sachant notamment que ladite Europalette (5) est fabriquée en bois.
